(19) Europäisches Patentamt
European Patent Office
Office européen des brevets

(11) **EP 4 755 696 A1**

(12) **EUROPEAN PATENT APPLICATION**

(43) Date of publication:
**10.06.2026 Bulletin 2026/24**

(21) Application number: **25218122.7**

(22) Date of filing: **24.11.2025**

(51) International Patent Classification (IPC):
**B60L 7/10** (2006.01)   **B60L 58/12** (2019.01)
**B60L 58/13** (2019.01)   **B60W 20/13** (2016.01)

(52) Cooperative Patent Classification (CPC):
**B60L 7/10; B60L 58/12; B60L 58/13; B60W 10/26;
B60W 20/13;** B60L 2200/40; B60L 2240/549;
B60W 2710/244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024 US 202418971882**

(71) Applicant: **Cummins, Inc.
Columbus, Indiana 47201 (US)**

(72) Inventors:
• **Scheuerell, Mike
Stillwater, 55082 (US)**
• **Ray, Arka Saha
Columbus, 47201 (US)**
• **Droege, Miles
Columbus, 47201 (US)**
• **Vipra, Niraj
Columbus, 47201 (US)**

(74) Representative: **Cleveland Scott York
5 Norwich Street
London EC4A 1DR (GB)**

(54) **ENERGY STORAGE AND DISPATCH FOR EMBEDDED CONTROL IMPLEMENTATION OF HYBRID MINING TRUCKS**

(57)    Methods and systems are disclosed for identifying, generating, and/or commanding operation parameters of a battery system (106) of a hybrid mining haul truck (100). The methods and systems disclosed herein may include sensors (112. 110) operationally coupled to a battery system (106) and/or an engine (104) of a vehicle to obtain characteristics related to a route of a vehicle and/or the vehicle's operation, which are configured to transmit signals to one or more processor functions for evaluation and generation of a battery system operation request or command.

FIG. 1

**Description**

TECHNICAL FIELD OF THE PRESENT DISCLOSURE

The present disclosure relates to the control of energy storage and dispatch in hybrid mining trucks. In particular, the present disclosure relates to systems and methods for operating a battery system, such as controlling energy storage, dispatch, and related current use to extend battery life and increase efficiency in energy usage during operation of mining trucks using hybrid and/or battery-based powertrain systems.

BACKGROUND OF THE PRESENT DISCLOSURE

Environmental and efficiency considerations have resulted in the electrification of vehicles across industries and purposes. While electric and hybrid passenger and cargo vehicles are becoming more commonplace, electrification and/or hybridization of large equipment vehicles poses its own set of challenges. For example, large equipment vehicles, such as mining trucks, cranes, bulldozers, etc. may require a workload and/or have a sheer size component that make implementation of alternative powertrains more difficult. Additionally, the power and environmental requirements of such vehicles during operation complicates efficient operative implementation of alternative powertrains.

SUMMARY OF THE DISCLOSURE

In a first aspect of the disclosure a method for operating a battery system of a vehicle is disclosed. The method includes selecting, with a first processor function, a threshold peak state of charge value of a battery system of the vehicle; selecting, with the first processor function, a target trough state of charge value of the battery system of the vehicle; receiving, with the first processor function, state of charge signals from a state of charge sensor of the battery system of the vehicle; identifying, with eh first processor function using the threshold peak state of charge value, the target trough state of charge value, the state of charge signals, and a route discharge duration of the battery system of the vehicle, at least one of a preferred discharge rate and a brake thermal energy charge limit; and transmitting, with the first processor function, at least one of a first signal indicating an increase of a discharge rate, a second signal indicating a decrease of the discharge rate, and a third signal indicating an imposition of a brake thermal energy charge limit to at least one of a second processor function and a battery management unit to change a metric of operation of the battery system.

In another aspect of the disclosure, a system for commanding operation parameters of a battery system of a hybrid mining haul truck is disclosed. The system includes a battery system including a state of charge sensor configured to measure and transmit a first signal indicating a state of charge of the battery system and a controller. The controller is configured to select a threshold peak state of charge value of the battery system; select a target trough state of charge value of the battery system; receive the first signal from the state of charge sensor; identify at least one of a preferred discharge rate and a brake thermal energy charge limit using the threshold peak state of charge value of the battery system, the target trough state of charge value of the battery system, the first signal from the state of charge sensor, and a route discharge duration of the battery system; and transmit a second signal commanding a change in operation of the battery system. The change in operation of the battery system includes at least one of an increase of a discharge rate of the battery system, a decrease of the discharge rate of the battery system, and an imposition of a brake thermal energy charge limit.

In yet another aspect of the disclosure, a method for operating a battery system of a mining haul truck is disclosed. The method includes receiving, with a first processor function, a first set of signals indicating at least one of the speed of the engine of the vehicle and an actual load of the engine of the vehicle; transmitting a second set of signals from the first processor function to a second processor function; receiving, with a third processor function, a third set of signals from at least one of an engine sensor, a brake system, the battery system, and a grid resistor system; transmitting a fourth set of signals from the third processor function to the second processor function; receiving, with a fourth processor function, a fifth set of signals indicating at least one of the speed of the engine and a current engine speed demand; transmitting a sixth set of signals from the fourth processor function to the second processor function; and transmitting a seventh set of signals commanding a change in one or more parameters of an operation of the battery system from the second processor function to the battery system.

In various aspects of the disclosure, the steps of selecting a threshold peak state of charge value and selecting a target trough state of charge value may each include using the at least one of a peak state of charge value, a trough state of charge value, and a route discharge duration of the battery system of the vehicle. The method may further include identifying an initial predetermined discharge rate in view of the selected target trough state of charge and the at least one of the peak state of charge value, the trough state of charge value, and the route discharge duration of the battery system of the vehicle. The method may further include transmitting, with the first processor function, a fourth signal indicating the initial predetermined discharge rate to the at least one of the second processor function and the battery management unit to apply the initial predetermined discharge rate to the battery system of the vehicle.

In various aspects of the disclosure, the step of selecting the threshold peak state of charge value of the battery system of the vehicle may include using predicted energy regeneration opportunities to estimate an amount of regeneration energy to be captured by the battery system during operation of the vehicle, the threshold peak state of charge value being selected to maintain a remaining capacity of the batter system equal to or greater than the estimated amount of regeneration energy to be captured. The method may further include altering the threshold peak state of charge value according to a position of the vehicle along a route of the vehicle.

In various aspects of the disclosure, the controller may use the at least one of a state of charge peak value, a state of charge trough value, and a route discharge duration of the battery system to select the threshold peak state of charge value of the battery system. The controller may use the at least one of a state of charge peak value, a state of charge trough value, and a route discharge duration of the battery system to select the target trough state of charge value of the battery system. The controller may be further configured to: identify an initial predetermined discharge rate in view of the selected target state of charge trough and the at least one of the state of charge peak value, the state of charge trough value, and the route discharge duration of the battery system of the vehicle; and transmit a third signal commanding application of the initial predetermined discharge rate to the battery system of the vehicle.

In various aspects of the disclosure, the controller may use predicted energy regeneration opportunities to estimate an amount of regeneration energy to be captured by the battery system during operation of the vehicle. The threshold peak state of charge value may be selected to maintain a remaining capacity of the battery system at a value that is equal or greater than the estimated amount of regeneration energy to be captured. The controller may be further configured to alter the threshold peak state of charge value according to a position of the vehicle along a route of the vehicle.

In various aspects of the disclosure, the method may further include transmitting an eighth set of signals from a fifth processor function to the second processor function, the eighth set of signals indicating at least one of an initial predetermined discharge rate of the battery system, a first increase in a discharge rate of the battery system, a first decrease in the discharge rate of the battery system, and a brake thermal energy charge limit.

In various aspects of the disclosure, the method may further include, in response to the third set of signals, at least one of: increasing engine charging of the battery system; introducing the discharge rate to the battery system; and increasing the discharge rate of the battery system.

In various aspects of the disclosure, the method may further include, in response to the fourth set of signals, at least one of: increasing regeneration capture; and decreasing regeneration capture.

In various aspects of the disclosure, the method may further include, in response to the sixth set of signals, at least one of: introducing a discharge rate of the battery system; increasing the discharge rate of the battery system; and increasing engine charging of the battery system. The method may further include at least one of: identifying a negative engine speed error, wherein the sixth set of signals indicates the increase in the discharge rate of the batter system; and identifying a positive engine speed error, wherein the sixth set of signals indicates the increase in engine charging of the battery system.

In various aspects of the disclosure, transmitting the seventh set of signals to the battery system may include transmitting the seventh set of signals directly from the second processor function to a battery management unit and transmitting a ninth set of signals from the battery management unit to the battery system.

In various aspects of the disclosure, the method may further include evaluating, with the second processor function, the second set of signals, the fourth set of signals, and the sixth set of signals; and generating, with the second processor function, a battery command in response to evaluation of the second set of signals, the fourth set of signals, and the sixth set of signals, the battery command corresponding to the seventh set of signals.

Additional features and advantages of the present disclosure will become apparent to those skilled in the art upon consideration of the following detailed description of the illustrative embodiments exemplifying the disclosure as presently perceived.

## BRIEF DESCRIPTION OF THE DRAWINGS

The detailed description of the drawings particularly refers to the accompanying figures in which:

FIG. **1** illustrates a schematic of a powertrain, control system, and sensor arrangement of a hybrid mining truck;
FIG. **2** illustrates a method for determining a discharge rate and/or BTE charge limit for a battery system of a mining truck;
FIG. **3** illustrates an example of graph illustrating the engine efficiency by power demand of a mining truck having a hybrid powertrain and a mining truck having a diesel internal combustion engine powertrain;
FIG. **4** illustrates an example of a lookup table for determining an optimal minimum instantaneous engine load for a given engine speed;

FIG. **5** illustrates an example of a method for facilitating final energy efficiency in view of current engine load and current engine speed of a mining truck by recommending an increase in engine charging of a battery system or discharge of the battery system;

FIG. **6** illustrates an example of a method for determining an increase in regeneration capture;

FIG. **7** illustrates an example of a method for determining introduction or increase or a discharge current in response to an engine speed error; and

FIG. **8** illustrates a method for determining a battery command for charge or discharge of a battery system of a mining truck in view of one or more charge and/or discharge requests from one or more functions of the mining truck.

Although the drawings represent embodiments of various features and components according to the present disclosure, the exemplification set out herein illustrates an embodiment, and such an exemplification is not to be construed as limiting the scope of the disclosure in any manner.

DETAILED DESCRIPTION OF THE DRAWINGS

The present disclosure relates to methods and systems for controlling a battery system, such as identifying, generating, and/or commanding operation parameters of the battery system of a hybrid mining haul truck. The methods and systems herein may include sensors operationally coupled to a battery system and/or an engine of a vehicle to obtain characteristics related to a route of a vehicle and/or the vehicle's operation, which are configured to transmit signals to one or more processor functions for evaluation and generation of a battery system operation request or command.

The terms "couples", "coupled", "coupler" and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

In some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

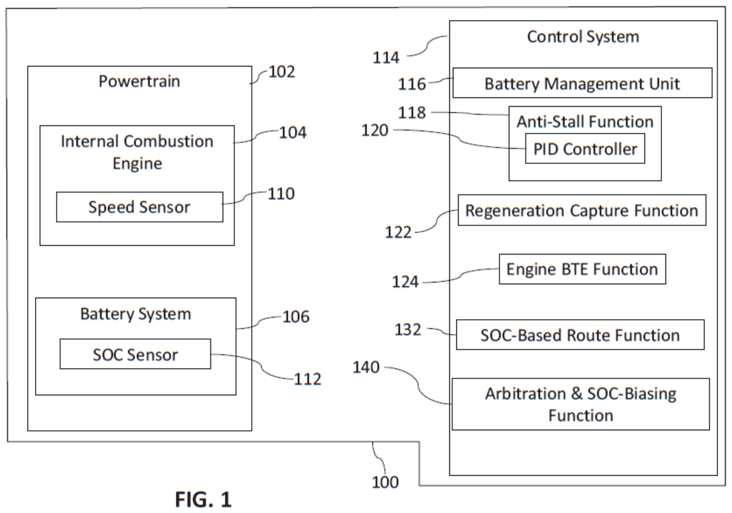

Referring to FIG. **1**, mining haul trucks, such as mining haul truck **100**, are often used for moving large loads from mining sites to dump sites or other offloading sites. As such, the routes that mining haul trucks use tend to be repetitive and/or follow an uphill-downhill pattern. These route characteristics, in combination with the sheer size and power requirements of the vehicles, provide variables for the efficient and safe use of alternative powertrains in such vehicles as hybrid and battery powertrains are being implemented. For example, different objectives may exist in the control of energy storage and dispatch in a mining haul truck compared to other, smaller vehicles. Furthermore, some individual functions of a hybrid mining haul truck powertrain may have competing priorities in regard to energy management and control. Some of these individual functions may include, but are not limited to, anti-stall of the engine (e.g., anti-stall function **118**), energy regeneration capture (e.g., regeneration capture function **122**), increase in engine load or fuel efficiency (e.g., engine BTE function **124**), and more effective route or state of charge management (e.g., SOC-based route function **132**).

Anti-stall function **118** of a hybrid mining haul truck may allow an internal combustion engine of the hybrid powertrain to operate independently of the load acceptance curve for higher brake thermal efficiency ("BTE") and to prevent stall of the engine. A battery system of the hybrid powertrain provides load acceptance by discharging rapidly when the engine speed is lagging the command. In other words, the anti-stall function of the mining truck may request rapid discharge of the battery system to avoid stall of the engine. As such, the anti-stall function may prioritize energy propulsion over regeneration charge, engine charge, and/or battery propulsion.

Regeneration capture function **122** of a hybrid mining haul truck may facilitate capture and storage of energy regenerated during regeneration events, such as, e.g., braking and/or downhill travel. The regeneration capture function may aim to ensure capture of all regenerated energy, or at least as much as possible, and therefore prioritize regenerated charging of the battery system over engine charge, engine propulsion, and/or battery propulsion.

An engine load function (e.g., engine BTE function **124**) of a hybrid mining haul truck may load the engine to improve BTE where such loading results in a net efficiency gain and/or increased fuel efficiency. Such function may account for losses within the battery system to improve overall net efficiency. As such, the engine load function may prioritize charging of the engine (i.e., loading of the engine) over regeneration charge, engine propulsion, and/or battery propulsion.

A route function (e.g., SOC-based route function **132**) of a hybrid mining haul truck may analyze the route of the vehicle to facilitate improved state of charge management by prioritizing avoidance of state of charge limitations. As such, the route function may prioritize charging of the engine and/or battery propulsion over regeneration charging and/or engine propulsion.

The diverse priorities of these functions may result in differing requests in amount of battery current and may even conflict on whether to charge or discharge the battery system. As such, arbitration of such requests across functions and systems facilitates improved efficiency of energy storage and usage, which further contributes to the health of the vehicle powertrain and its components.

While the disclosure herein refers most particularly and/or specifically to "mining haul trucks", it is understood that the disclosure herein may also apply to other large vehicles having similar systems. For example, the disclosure herein may also apply to dump trucks, bulldozers, cranes, excavators, bucket trucks, graders, backhoes, earthmovers, trenchers, road rollers, pull scrapers, and other large vehicles.

Still referring to FIG. **1**, a hybrid mining haul truck **100** may include a powertrain **102** including an engine **104** and a battery system **106** to facilitate operation of truck **100**. Engine **104** may include a speed sensor **110** to measure the speed of engine **104** as described further herein. Engine **104** may include other components, including sensors, controllers, or the like, as necessary for operation.

As used herein "battery system" refers to any collection of batteries, including battery packs, battery modules, battery cells, etc., for operation of a battery or hybrid powertrain. Battery system **106** may include a state of charge ("SOC") sensor **112** to measure the SOC of battery system **106**. As used herein, SOC sensor **112** may include a plurality of sensors where each sensor is configured to measure an SOC of an individual cell, pack, or other unit of one or more batteries, wherein the plurality of sensors transmits the measured SOC to an internal or external controller, including, but not limited to, controller **114** as discussed further herein, for calculation of an SOC of battery system **106** as a whole. In other embodiments, as used herein, SOC sensor **112** may be a single sensor which measures the SOC of battery system **106** as a whole, rather than as its individual components where applicable.

Truck **100** may further include a control system, or controller **114,** which may include a plurality of components to facilitate receiving, processing, and transmitting signals to and from various components of truck **100** for operation of truck **100** as described further herein. Controller **114** may include a battery management unit **116,** an anti-stall function **118** which may include a proportional-integral-derivative ("PID") controller **120,** a regeneration capture function **122,** an engine brake thermal efficiency ("BTE") function **124,** an SOC-based route function **132,** and/or an arbitration and SOC-biasing function **138.**

Each of anti-stall function **118,** regeneration capture function **122,** engine BTE function **124,** SOC-based route function **132,** and arbitration and SOC-biasing function **138** may be described further herein as "processor functions", wherein the control system may include any one of or a combination of a first processor function, a second processor function, a third processor function, a fourth processor function, and/or a fifth processor function which may refer to any one or a combination of anti-stall function **118**, regeneration capture function **122**, engine BTE function **124**, SOC-based route function **132**, and/or arbitration and SOC-biasing function **138** as described further herein.

For example, each of the first processor function, the second processor function, the third processor function, the fourth processor function, and/or the fifth processor function may be the same function or different functions or a combination of the same and/or different functions. Some embodiments may include less than five processor functions, while other embodiments may include greater than five processor functions. In some embodiments, each processor function of the embodiment may be selected from the list above, or, in other embodiments, one or more of the included processor functions may include another processor function that is not explicitly included in the list but is configured to carry out the logic and/or method(s) as described further herein.

Each of the processor functions may be a function of controller **114**; e.g., the processor functions may be a result of an algorithm or other logic carried out by controller **114**. Controller **114** may refer to a single controller and/or processor or a plurality of controllers and/or processors within a network of controllers and/or processors.

In some embodiments, SOC-based route function **132** may establish an initial predetermined discharge rate for discharge of battery system 106. For example, SOC-based route function **132** may be configured to prioritize dispensing of stored energy from battery system **106** at a generally even rate to facilitate minimization of energy loss in the form of dissipated heat. In other words, resistive electrical loss and heating is proportional to the current squared of battery system **106**; as such, even discharge of battery system **106** may minimize energy loss.

The initial predetermined discharge rate may be calculated by SOC-based route function **132** using a peak SOC value of battery system **106** in view of a route discharge duration and/or a target trough SOC. The target trough SOC is generally equivalent to a desired minimum SOC of battery system **106**. For example, the target trough SOC may be a value greater than zero and/or greater than the minimum capacity value of battery system **106**. The initial predetermined discharge rate is proportional to the difference between the measured peak SOC and the target trough SOC over the route discharge duration. In other words, the equation for identifying the initial predetermined discharge rate is provided below:

$$Discharge\ Rate \propto \frac{Peak\ SOC - Target\ Trough\ SOC}{Route\ Discharge\ Duration}$$

SOC-based route function **132** may transmit the initial predetermined discharge rate as discussed further herein as a request for the initial predetermined discharge rate to be applied to facilitate dispensing of energy from battery system **106** at an even rate. The initial predetermined discharge rate may also be evaluated in view of the current SOC value of battery system **106** and a threshold peak SOC value as discussed further herein. For example, SOC-based route function **132** may identify an initial predetermined discharge rate as a default target discharge rate and, as discussed further herein, request increase or decrease of the discharge rate in accordance with information received during operation of vehicle **100.**

The threshold peak SOC value may be below the capacity value of battery system **106** to facilitate capture of regenerated energy during operation of the vehicle. For example, SOC-based route function **132** may select a threshold peak SOC value which, when beginning at a top altitude of the vehicle route, maintains enough SOC capacity with battery system **106** to capture the entirety of energy regenerated during the downhill operation of vehicle **100,** which may be estimated in view of the peak SOC value, the trough SOC value, and the route discharge duration.

SOC-based route function **132** may identify an estimated required SOC value of battery system **106** for completion of the vehicle route. The estimated required SOC value may be the SOC of battery system **106** that is estimated to be required to complete one cycle of the vehicle route (e.g., beginning and ending at the uphill point of the route or beginning and ending at the downhill point of the route). For example, SOC-based route function **132** may compare the trough SOC value with the capacity of battery system **106** and/or a position of vehicle **100** when the trough SOC value was identified by SOC metric processor **126.** The identified estimated required SOC value sets a baseline for SOC-based route function **132** when selecting a threshold peak SOC value, which is equal to or greater than the identified estimated required SOC value.

In some embodiments, SOC-based route function **132** may identify an estimated regeneration value, wherein the estimated regeneration value is the amount of energy regenerated during vehicle operation along one or more portions of the vehicle route. SOC-based route function **132** may select a threshold peak SOC value so that the remaining capacity of battery system **106** above the threshold peak SOC value is nearly equal to the estimated regeneration value and/or so that the sum of the estimated regeneration value and the threshold peak SOC value is equal or greater to the estimated required SOC value described above.

The SOC-based route function **132** may generate a discharge rate value and a BTE charge limit value configured to maintain the SOC of battery system **106** at or below the threshold peak SOC value. For example, in some embodiments, SOC-based route function **132** may identify a paired BTE charge limit value and discharge rate value which, when used together, will maintain the SOC of battery system **106** at or below the threshold peak SOC value or, in other words, below the maximum SOC capacity of battery system **106** to facilitate maximum or near maximum capture of regeneration energy as vehicle **100** travels along its route.

A BTE charge limit value imposes a maximum limit on the amount of heat energy engine **104** may provide to battery system **106** to charge battery system **106.** By capping the heat energy provided to battery system **106** directly from engine **104,** the SOC of battery system **106** may be kept at or below the threshold peak SOC value to ensure battery system **106** retains enough capacity to facilitate maximum or near maximum capture of regeneration energy as mentioned above, which may increase the energy efficiency of vehicle **100** when compared to utilization of BTE charging of battery system **106**.

In addition, or alternative to capping and/or reducing engine charging through imposition of a BTE charge limit, SOC-based route function **132** may identify a discharge rate value to facilitate maintaining the SOC of battery system **106** at or below the threshold peak SOC value. For example, as the peak SOC value approaches the threshold peak SOC value and/or, in some embodiments, as the SOC value received from SOC sensor **112** of battery system **106,** approaches the threshold peak SOC value, SOC-based route function **132** may request an increased discharge rate of battery system **106** to maintain the SOC of battery system **106** at or below the threshold peak SOC value.

SOC-based route function **132** may update the threshold peak SOC value according to the altitude and/or direction of movement of vehicle **100.** For example, the threshold peak SOC value maybe greater when vehicle **100** is in a position along its route at a lower altitude moving uphill relative to a lower threshold peak SOC value when vehicle **100** is in a position along its route at a higher altitude moving downhill, as the regeneration capture potential is greater as vehicle **100** moves downhill along its route. In other words, SOC-based route function **132** may raise or lower the threshold peak SOC value in accordance with the position of vehicle **100** along its route.

In some embodiments, SOC-based route function **132** may facilitate maximization of the average battery voltage to minimize electrical loss. For example, as described above, resistive electrical loss and heating is proportional to current squared, which indicates that a reduction in current reduces loss. Power is the product of voltage and current. As such, a raise in voltage reduces the current required for equal power production.

Voltage is proportional to the SOC of battery system **106.** In other words, the higher the average SOC value of battery system **106,** the higher the voltage. By increasing the average peak SOC of battery system **106,** the average voltage of battery system **106** remains higher, reducing the current required for equal power and reducing electrical loss. As such, the SOC-based route function **132** may select a maximum threshold peak SOC value in view of the estimated regeneration value above. That is, the SOC-based route function **132** may select a maximum threshold peak SOC value that is equal to or nearly equal to a value which maintains empty capacity of battery system **106** at a value that is equal to or nearly equal to the estimated regeneration value. In some embodiments, the SOC-based route function **132** may prioritize a maximum average battery voltage. In other embodiments, the SOC-based route function **132** may prioritize capture of regeneration energy. Preferably, SOC-based route function **132** evaluates both metrics in generation of a threshold peak SOC value.

In order to maximize average battery voltage, i.e., SOC, to minimize electrical loss, SOC-based route function **132** may increase the BTE charge limit to increase engine charging and/or request a decreased discharge rate of battery system **106** to maintain the SOC of battery system **106** at or near the threshold peak SOC value. For example, in some embodiments when the SOC of battery system **106** falls below a certain value and/or the peak SOC value does not meet the threshold peak SOC value, SOC-based route function **132** may increase the BTE charge limit to allow a greater amount of engine charging, bringing the SOC closer to the threshold peak SOC value.

In other embodiments, when the SOC of battery system **106** falls below a certain value and/or the peak SOC value does not meet the threshold peak SOC value, SOC-based route function **132** may request a decreased discharge rate of battery system **106** to facilitate battery system **106** maintaining a higher average SOC during discharge of battery system **106**. In yet other embodiments, when the SOC of battery system **106** falls below a certain value and/or the peak SOC value does not meet the threshold peak SOC value, SOC-based route function **132** may both increase the BTE charge limit and request a decreased discharge rate to increase engine charging while maintaining a higher SOC of battery system **106** during discharge.

SOC-based route function **132** may transmit the selected BTE charge limit and/or discharge rate to other functions and/or processors within control system **114**. For example, the selected BTE charge limit and/or discharge rate may be transmitted to and used by arbitration and state of charge biasing function **138** as described further herein. In some embodiments, the selected BTE charge limit and/or discharge rate may be transmitted to and stored in a memory, which may be included within control system **114**, a cloud-based storage service, or another data storage mechanism or system.

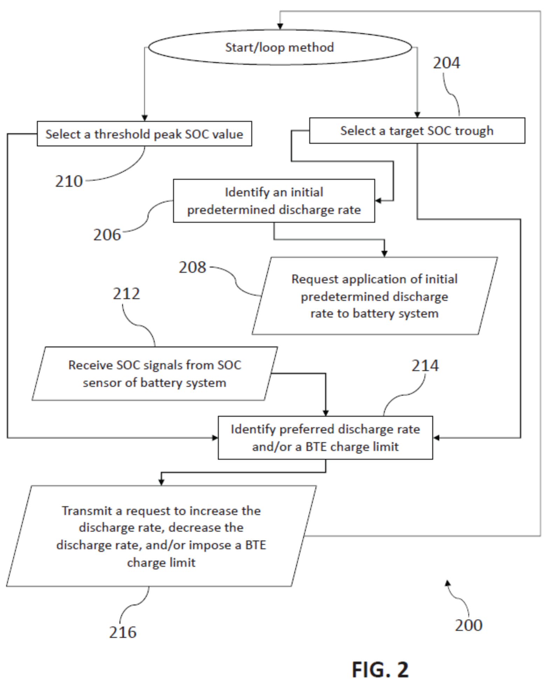

Now referring to FIG. **2** in view of FIG. **1**, a method **200** for identifying parameters of battery system discharge in view of vehicle route characteristics is illustrated. For example, in some embodiments, at box **204**, SOC-based route function **132** may select a target trough SOC which is generally equivalent to a desired minimum SOC of battery system **106**. At box **206**, SOC-based route function **132** may calculate an initial predetermined discharge rate in view of the peak SOC value, the trough SOC value, and the route discharge duration.

At box **208**, SOC-based route function **132** may transmit a request to a processor or function of control system **114** and/or vehicle **100** to apply initial predetermined discharge rate to battery system **106**. In some embodiments, SOC-based route function **132** may request application of initial predetermined discharge rate to battery system **106** as an initial discharge rate of battery system **106**, which is then modified as described further herein.

For example, at box **210**, SOC-based route function **132** may select a threshold peak SOC value which is less than the capacity value of battery system **106** to facilitate capture of regeneration energy.

In some embodiments, SOC-based route function **132** may prioritize maintaining an average SOC value of battery system **106** at a near-peak or near-threshold-peak SOC to reduce current as described above and further herein. For example, SOC-based route function **132** may receive an SOC of battery system **106** from SOC sensor **112** of battery system **106** at box **212**.

At box **214**, SOC-based route function **132** may identify a preferred discharge rate and/or a BTE charge limit to maintain the SOC value of battery system **106** below the threshold peak SOC value. For example, SOC-based route function **132** may use the information from box **212** to identify the threshold peak SOC value at box **210** and/or a preferred discharge rate and/or a BTE charge limit at box **214** to maintain the SOC of battery system **106** equal to or as nearly equal to the threshold peak SOC value as possible. In other words, SOC-based route function **132** may, at box **214**, evaluate the information received at box **212** to identify a preferred discharge rate and/or a BTE charge limit which maintains the SOC of battery system **106** as near to the threshold peak SOC value as possible. In some embodiments, the preferred discharge rate may indicate an increase or a decrease of the current discharge rate, e.g., the initial predetermined discharge rate.

SOC-based route function **132** may transmit a request to a processor or function of control system **114** and/or vehicle **100** to alter a characteristic of operation of vehicle **100** at box **216**. For example, SOC-based route function may transmit a request to increase the discharge rate of battery system **114,** decrease the discharge rate of battery system **114,** and/or impose a BTE charge limit to battery system **114** and/or engine **104**. In some embodiments, SOC-based route function **132** may transmit such requests to arbitration and SOC biasing function **138**. In other embodiments, SOC-based route function **132** may transmit such requests to battery management unit **116** or another processor or function of control system **114** and/or vehicle **100**.

The events as illustrated at box **204**, **206**, **208**, **210**, **212**, **214**, and/or **216** of FIG. **2** may occur simultaneously, nearly simultaneously, and/or in any varying order alternative order relative to the other boxes illustrated in FIG. **2** and/or method **200**, especially where such events may be occurring constantly during operation of vehicle **100**.

Referring again to FIG. **1**, engine BTE function **124** is configured to identify whether battery system **106** should be charged via engine charging or discharged to facilitate final energy efficiency in view of current engine load and current engine speed during operation of truck **100**. For example, engine BTE function **124** may identify an optimized amount of power to be provided to battery system **106** via engine charging in view of current engine load and current engine speed during operation of truck **100** or, alternatively, may request discharge of batteries during periods of heavy engine loading to maintain a high BTE average.

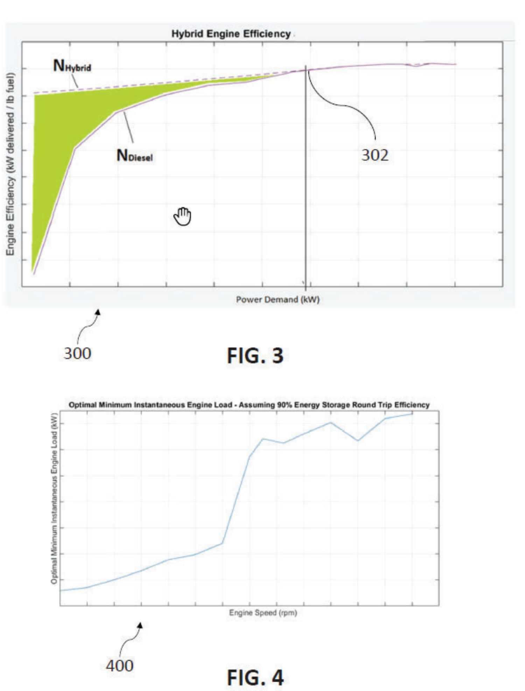

Referring to FIG. **3**, engine efficiency may be measured and plotted by dividing a measured amount of power delivered from an engine by the amount of fuel burned to provide the measured amount of power in a diesel-only mode and in a hybrid mode at a given engine speed. A hybrid engine efficiency at a given engine speed may be determined by plotting the engine efficiency at a certain speed against the power demand on the engine in both a fuel mode (i.e., "$N_{diesel}$") and a hybrid mode (i.e., "$N_{hybrid}$"). Graph **300** is intended to be exemplary in nature, and it is understood that the calculation of engine efficiency and such plotting against power demand may vary in view of vehicles, engines, environmental factors, fuel used, etc. The optimal engine load at said given speed may be determined by identifying the point at which $N_{diesel}$ and $N_{hybrid}$ meet, i.e., point **302**.

Referring now to FIG. **4**, a lookup table **400** may be provided which plots the optimal instantaneous engine load (i.e., the determination made in view of FIG. **3**) against its corresponding speed. Such lookup table may be used as discussed further below to identify an optimized charging/discharging function of battery system **106** under the following assumptions: a fixed energy storage round-trip efficiency, an infinite battery capacity, and that point **302** as identified in FIG. **3** is the break-even point. As with graph **300,** lookup table **400** is intended to be exemplary in nature, and it is understood that the values presented herein may vary in view of vehicles, engines, environmental factors, fuel used, etc.

A lookup table corresponding with vehicle **100** may be generated as described in relation to graph **300** and lookup table **400** and stored in a memory included within control system **114**, a cloud-based storage service, or another data storage mechanism or system accessible by engine BTE function **124**. The lookup table may be pre-generated and/or may be generated and updated according to engine efficiency of vehicle **100** during operation. The lookup table may be generated and used herein under the following assumptions: fixed energy storage round-trip efficiency (i.e., 70% efficiency, 80% efficiency, 85% efficiency, 90% efficiency, 92% efficiency, 94% efficiency, 96% efficiency, 98% efficiency, or a lesser or greater percentage of efficiency predetermined upon generation of the lookup table); infinite battery capacity, which is accounted for during evaluation by SOC-based route function **132** discussed above; and that the lowest power value where $N_{diesel}$ and $N_{hybrid}$ meet (i.e., point **302** of FIG. **3**) is considered to be the break-even point.

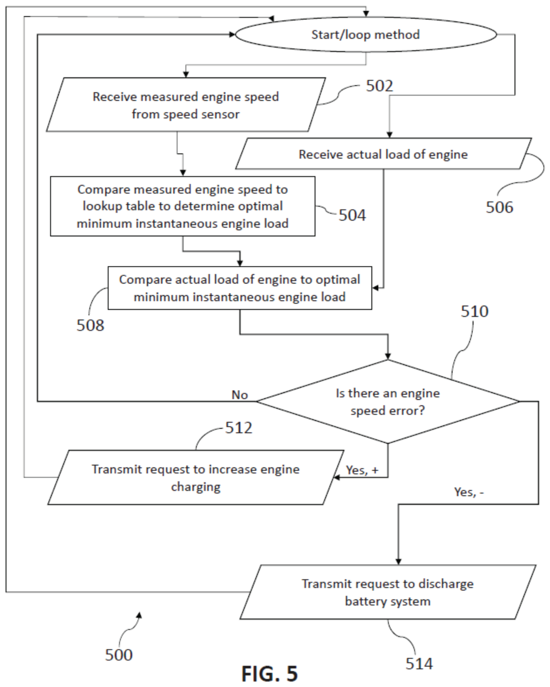

Referring to FIG. **5**, engine BTE function **124** may determine whether it is beneficial increase engine charging or increase discharge of battery system **106** according to method **500**. For example, engine BTE function **124** may receive a measured engine speed from speed sensor **110** of engine **104** as shown in box **502**. Engine BTE function **124** may then compare the measured engine speed to the lookup table to identify a corresponding optimal minimum instantaneous engine load at box **504**.

Engine BTE function **124** may also receive an actual load of engine **104** from one or more sensors communicatively coupled with engine **104**, another vehicle subsystem, and/or one or more processors of control system **114** and/or vehicle **100** at box **506**. Although method **500** illustrates box **506** as coming after box **504**, the step of receiving an actual load of engine **104** may also happen before and/or simultaneously with box **502** and/or **504**. Engine BTE function **124** may then compare the actual load of engine **104** with the optimal minimum instantaneous engine load obtained from the lookup table which corresponds with the engine speed at box **508** and determine whether an engine speed error exists at box **410.**

The difference between the optimal minimum instantaneous engine load obtained from the lookup table and the actual load of engine **104** may determine whether engine BTE function **124** requests engine charging of battery system **106** or discharge of battery system **106.** For example, if the optimal minimum instantaneous engine load is greater than the actual load of engine **104,** then engine BTE function **124** may request an increase in engine charging of battery system **106** to increase the actual load of engine **104** toward the optimal minimum instantaneous engine load at box **512.** However, if the optimal minimum instantaneous engine load is less than the actual load of engine **104,** then engine BTE function **124** may request discharge of battery system **106** (i.e., an increase in use of battery system **106** to operate vehicle **100** in a hybrid mode) to decrease the actual load of engine **104** toward the optimal minimum instantaneous engine load at box **514.** If the optimal minimum instantaneous engine load meets the actual load of engine **104,** then engine BTE function **124** may continue to monitor via method **500.**

The request produced by engine BTE function **124** may be described as a "BTE term" herein. Engine BTE function **124** may transmit the BTE term to arbitration and SOC biasing function **138** as shown in FIG. **1** and described further herein. In some embodiments, the BTE term may be transmitted to and stored in a memory, which may be included within control system **114,** a cloud-based storage service, or another data storage mechanism or system.

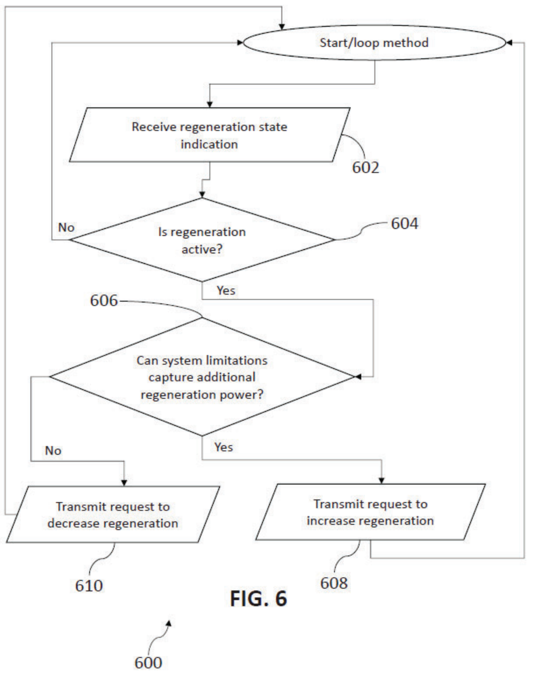

Referring again to FIG. **1**, regeneration capture function **122** is configured to generate a request for capture of regeneration (i.e., "a regeneration term") to facilitate maximum capture of regenerated energy in view of vehicle and system limitations. For example, referring additionally to method **600** of FIG. **6**, regeneration capture function **122** may receive a regeneration state indication from one or more sensors in engine **104,** a brake system of vehicle **100,** battery system **106**, a grid resistor system of vehicle **100,** and/or other vehicle subsystems and/or processors at box **602.**

If the regeneration system of vehicle **100** is active at box **604** and the system limitations may capture additional regeneration power at box **606,** regeneration capture function **122** may request an increase in regeneration to draw power away from the grid resistor system of vehicle **100** at box **608.** If the regeneration system of vehicle **100** is not active at box **604** and/or if the system limitations cannot capture any additional regeneration power at box **606,** regeneration capture function **122** may continue to monitor via method **600.**

In some embodiments, if the regeneration system is active but the system limitations cannot capture additional regeneration power, regeneration capture function **122** may transmit a request to decrease regeneration at box **610.**

In some embodiments, if regeneration capture function **122** is unable to obtain a grid current or power measurement, regeneration capture function **122** may receive an actual load of engine **104** from one or more sensors communicatively coupled with engine **104,** another vehicle subsystem, and/or one or more processors of control system **114** and/or vehicle **100** and use the actual load of engine **104** as a feedback mechanism to indicate when charge power exceeds regeneration power.

Regeneration capture function **122** may transmit the regeneration term to arbitration and SOC biasing function **138** as described further herein. In some embodiments, the regeneration term may be transmitted to and stored in a memory, which may be included within control system **114,** a cloud-based storage service, or another data storage mechanism or system.

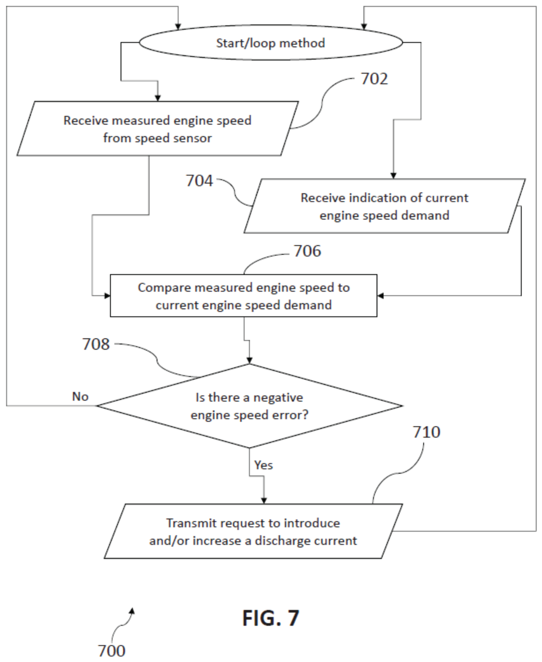

Referring again to FIG. **1,** anti-stall function **118** is configured to mitigate the chance of and/or prevent stall of engine **104** which may result from additional load on engine **104** imposed by engine charging of battery system **106.** For example, referring additionally to method **700** illustrated in FIG. **7,** anti-stall function **118** may receive signals from speed sensor **110** of engine **104** which indicate the speed of engine **104** at box **702.** Anti-stall function **118** may also receive indication of the current engine speed demand from another processor of vehicle **100** and/or control system **114** at box **704.**

The current engine speed demand is compared with the current engine speed to determine whether there is an engine speed error at box **706.** If, a negative engine speed error is detected, at box **708,** that is, if the current engine speed is less than the current engine speed demand, anti-stall function **118** generates and transmits a request to introduce and/or increase a discharge current to battery system **106** at box **710,** which decreases the actual load of engine **104** to facilitate an increase in engine speed. If a positive engine speed error or no engine speed error is detected, anti-stall function **118** continues to monitor via method **700.** In some embodiments, anti-stall function **118** may include a PID controller **120** to compare the current engine speed demand with the current engine speed.

Anti-stall function **118** may transmit the discharge request to arbitration and SOC biasing function **138** as described further herein. In some embodiments, the discharge request may be transmitted to and stored in a memory, which may be included within control system **114,** a cloud-based storage service, or another data storage mechanism or system.

Arbitration and SOC biasing function **138** may receive any one or more of the selected BTE charge limit and/or discharge rate transmitted by SOC-based route function **132;** BTE term transmitted by engine BTE function **124;** regeneration term transmitted by regeneration capture function **122;** and/or the discharge request transmitted by anti-stall function **118.** The arbitration and SOC biasing function **138** may generate a battery command, such as a discharge current command, in view of the received signals and transmit the battery command to battery management unit **116,** battery system **106,** or another processor or controller of control system **114** and/or vehicle **100.**

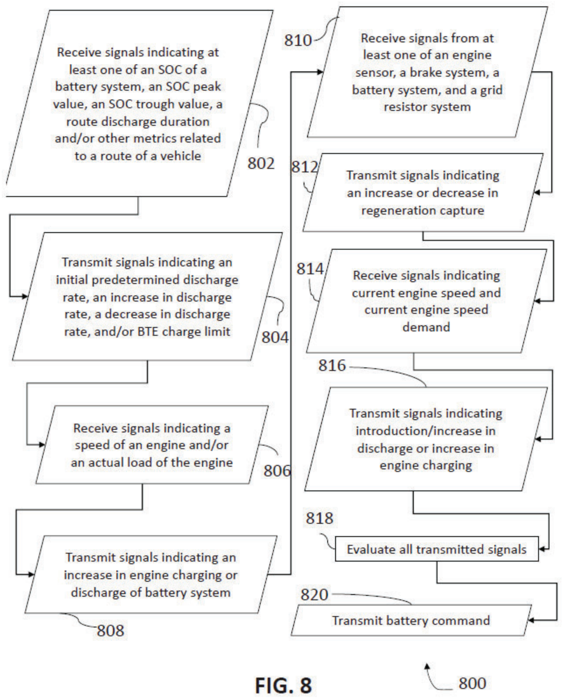

Now referring to FIG. **8,** a method **800** for instructing a battery discharge rate or other battery system commands in vehicle **100** is illustrated. For example, in some embodiments, SOC-based route function **132** may receive signals from SOC sensor **112** of battery system **106** at box **802** to transmit signals to arbitration and SOC biasing function **138** or another processor or function which indicate an initial predetermined discharge rate, increase in discharge rate, decrease in discharge rate, and/or BTE charge limit at box **804** and as discussed further above in relation to FIG. **2.**

At box **806,** engine BTE function **124** may receive signals from at least one of speed sensor **110** of engine **104** and/or one or more sensors, vehicle subsystem(s), and/or processor(s) configured to measure and/or transmit an actual load of engine **104** to, at box **808,** transmit signals to arbitration and SOC biasing function **138** or another processor or function which indicate an increase in engine charging of battery system **104** or discharge of battery system **106,** i.e., "BTE term", as discussed further above in relation to FIGS. **3-5.**

Regeneration capture function **122** may receive signals from at least one of sensor(s) in engine **104,** a brake system of vehicle **100,** battery system **106,** a grid resistor system of vehicle **100,** and/or other vehicle subsystems and/or processors at box **810.** At box **812,** regeneration capture function **122** may transmit signals to arbitration and SOC biasing function **138** or another processor or function which indicate an increase or decrease in regeneration capture, i.e., "regeneration term", according to evaluation of the signals received at box **810** and further discussed above in relation to FIG. **6.**

Anti-stall function **118** may receive signals from at least one of speed sensor **110** of engine **104** and/or another processor of vehicle and/or control system **114** indicating the current engine speed demand at box **814.** At box **816,** anti-stall function **118** may transmit signals to arbitration and SOC biasing function **138** or another processor or function which indicate an introduction and/or increase in discharge current to battery system **106**. Anti-stall function **118** and its methods are further discussed above in relation to FIG. **7**.

At box **818**, arbitration and SOC biasing function **138** and/or another processor or function of control system **114** and/or vehicle **100** may evaluate the signals from at least one of SOC-based route function **132**, engine BTE function **124**, regeneration capture function **122**, and anti-stall function **118** to generate a battery command. At box **820**, arbitration and SOC biasing function **138** may transmit the battery command to battery management unit **116**, battery system **106**, or another processor or controller of control system **114** and/or vehicle **100**.

In some embodiments, box **818** and box **820** may, instead of arbitration and SOC biasing function, include an alternative processor or function of control system **114** and/or vehicle **100**. In other words, method **800** does not require the use of arbitration and SOC biasing function to result in an operational or functional change to the operation of battery system **106**. Furthermore, method **800**, to the extent that such operational or functional changes to operation of battery system **106** are implemented, may include only one of SOC-based route function **132**, engine BTE function **124**, regeneration capture function **122**, and/or anti-stall function **118**.

In some embodiments, battery management unit **116** and/or battery system **106** may receive and evaluate signals from any one or more of SOC-based route function **132**, engine BTE function **124**, regeneration capture function **122**, and/or anti-stall function **118** to implement operational or functional changes to operation of battery system **106**. In other embodiments, other operational and/or functional changes may be implemented to engine **104** and/or other vehicle subsystems or functions in view of the requests and priorities of the logic and functions as described herein, for example.

The system and methods as described herein may leverage repeated routes of vehicle **100** to identify opportunities for storing or discharging energy in/from battery system **106** as vehicle **100** travels along the route in view of metrics related to the route and position of vehicle **100** along the route. For example, as vehicle **100** travels downhill, energy regeneration and storage may be more efficient than when vehicle **100** travels uphill. In view of this, available battery capacity may preferably be greater at the top of a hill (i.e., when vehicle **100** is traveling or ready to travel downhill) so that more regenerated energy may be stored and used later. Similarly, available battery capacity may preferably be lesser at the bottom of the hill (i.e., when vehicle **100** is traveling or ready to travel uphill) to mitigate a chance of running out of battery-stored energy before reaching the top of the hill, including considerations in speed and route terrain.

As discussed above, power loss through thermal energy loss may be mitigated by keeping the voltage, or average SOC, of battery system **106** as high as possible while keeping other considerations regarding energy regeneration storage and needed power to complete the route in mind. Mitigation of power loss may be obtained by keeping current within battery system **106** as low as possible, e.g., by keeping charging and discharging of battery system **106** as even as possible throughout travel of vehicle **100** along its route. As described above, by finding a true fundamental frequency of the SOC cycle of battery system **106** that mirrors the route cycle may facilitate increased battery efficiency.

While the system and methods herein have been described by reference to various specific embodiments it should be understood that numerous changes may be made within the spirit and scope of the concepts described, accordingly, it is intended that the invention is not limited to the described embodiments but will have full scope defined by the language of the following claims.

For the purposes of promoting an understanding of the principles of the present disclosure, reference will now be made to the embodiments illustrated in the drawings, which are described herein. The embodiments disclosed herein are not intended to be exhaustive or to limit the invention to the precise form disclosed. Rather, the embodiments are chosen and described so that others skilled in the art may utilize their teachings. Therefore, no limitation of the scope of the claimed invention is thereby intended. The present invention includes any alterations and further modifications of the illustrated devices and described methods and further applications of principles in the invention which would normally occur to one skilled in the art to which the invention relates.

**Claims**

**1.** A method for operating a battery system (106) of a vehicle, the method comprising:

selecting, with a first processor function, a threshold peak state of charge value of a battery system of the vehicle;
selecting, with the first processor function, a target trough state of charge value of the battery system of the vehicle;
receiving, with the first processor function, state of charge signals from a state of charge sensor (112) of the battery system of the vehicle;
identifying, with the first processor function using the threshold peak state of charge value, the target trough state of charge value, the state of charge signals, and a route discharge duration of the battery system of the vehicle, at least one of a preferred discharge rate and a brake thermal energy charge limit; and
transmitting, with the first processor function, at least one of a first signal indicating an increase of a discharge rate, a second signal indicating a decrease of the discharge rate, and a third signal indicating an imposition of a brake thermal energy charge limit to at least one of a second processor function and a battery management unit to change a metric of operation of the battery system.

2. The method of claim 1, wherein the steps of selecting a threshold peak state of charge value and selecting a target trough state of charge value each include using the at least one of a peak state of charge value, a trough state of charge value, and a route discharge duration of the battery system of the vehicle.

3. The method of claim 2, further comprising identifying an initial predetermined discharge rate in view of the selected target trough state of charge and the at least one of the peak state of charge value, the trough state of charge value, and the route discharge duration of the battery system of the vehicle.

4. The method of claim 3, further comprising transmitting, with the first processor function, a fourth signal indicating the initial predetermined discharge rate to the at least one of the second processor function and the battery management unit to apply the initial predetermined discharge rate to the battery system of the vehicle.

5. The method of any of the preceding claims, wherein the step of selecting the threshold peak state of charge value of the battery system of the vehicle includes using predicted energy regeneration opportunities to estimate an amount of regeneration energy to be captured by the battery system during operation of the vehicle, the threshold peak state of charge value being selected to maintain a remaining capacity of the battery system equal to or greater than the estimated amount of regeneration energy to be captured.

6. The method of claim 5, further comprising altering the threshold peak state of charge value according to a position of the vehicle along a route of the vehicle.

7. A system for commanding operation parameters of a battery system of a hybrid mining haul truck, the system comprising:

a battery system (106) including a state of charge sensor (112) configured to measure and transmit a first signal indicating a state of charge of the battery system; and
a controller (114) configured to:

select a threshold peak state of charge value of the battery system;
select a target trough state of charge value of the battery system;
receive the first signal from the state of charge sensor;
identify at least one of a preferred discharge rate and a brake thermal energy charge limit using the threshold peak state of charge value of the battery system, the target trough state of charge value of the battery system, the first signal from the state of charge sensor, and a route discharge duration of the battery system; and

transmit a second signal commanding a change in operation of the battery system, wherein the change in operation of the battery system includes at least one of an increase of a discharge rate of the battery system, a decrease of the discharge rate of the battery system, and an imposition of a brake thermal energy charge limit.

8. The system of claim 7, wherein the controller uses the at least one of a state of charge peak value, a state of charge trough value, and a route discharge duration of the battery system to select the threshold peak state of charge value of the battery system.

9. The system of claim 7 or 8, wherein the controller uses the at least one of a state of charge peak value, a state of charge trough value, and a route discharge duration of the battery system to select the target trough state of charge value of the battery system.

10. The system of any of claims 7-9, wherein the controller is further configured to:

identify an initial predetermined discharge rate in view of the selected target state of charge trough and the at least one of the state of charge peak value, the state of charge trough value, and the route discharge duration of the battery system of the vehicle; and
transmit a third signal commanding application of the initial predetermined discharge rate to the battery system of the vehicle.

11. The system of any of claims 7-10, wherein the controller uses predicted energy regeneration opportunities to estimate an amount of regeneration energy to be captured by the battery system during operation of the vehicle; and the threshold peak state of charge value is selected to maintain a remaining capacity of the battery system at a value that is equal or greater than the estimated amount of regeneration energy to be captured.

12. The system of claim 11, wherein the controller is further configured to alter the threshold peak state of charge value according to a position of the vehicle along a route of the vehicle.

13. A method for operating a battery system of a mining haul truck, the method comprising:

receiving, with a first processor function, a first set of signals indicating at least one of the speed of the engine of the vehicle and an actual load of the engine of the vehicle;
transmitting a second set of signals from the first processor function to a second processor function;
receiving, with a third processor function, a third set of signals from at least one of an engine sensor, a brake system, the battery system, and a grid resistor system;
transmitting a fourth set of signals from the third processor function to the second processor function;
receiving, with a fourth processor function, a fifth set of signals indicating at least one of the speed of the engine and a current engine speed demand;
transmitting a sixth set of signals from the fourth processor function to the second processor function; and
transmitting a seventh set of signals commanding a change in one or more parameters of an operation of the battery system from the second processor function to the battery system.

14. The method of claim 13, further comprising transmitting an eighth set of signals from a fifth processor function to the second processor function, the eighth set of signals indicating at least one of an initial predetermined discharge rate of the battery system, a first increase in a discharge rate of the battery system, a first decrease in the discharge rate of the battery system, and a brake thermal energy charge limit.

15. The method of claim 13 or 14, further comprising at least one of:

in response to the third set of signals, increasing engine charging of the battery system and/or introducing a discharge rate to the battery system, and/or increasing the discharge rate of the battery system;
in response to the fourth set of signals, increasing regeneration capture and/or decreasing regeneration capture;
in response to the sixth set of signals, introducing a discharge rate of the battery system and/or increasing the discharge rate of the battery system and/or increasing engine charging of the battery system;
identifying a negative engine speed error, wherein the sixth set of signals indicates the increase in the discharge rate of the battery system;
identifying a positive engine speed error, wherein the sixth set of signals indicates the increase in engine charging of the battery system;
transmitting the seventh set of signals directly from the second processor function to a battery management unit and transmitting a ninth set of signals from the battery management unit to the battery system;
evaluating, with the second processor function, the second set of signals, the fourth set of signals, and the sixth set of signals; and/or
generating, with the second processor function, a battery command in response to evaluation of the second set of signals, the fourth set of signals, and the sixth set of signals, the battery command corresponding to the seventh set of signals.

FIG. 1

FIG. 2

**Hybrid Engine Efficiency**

N_Hybrid

N_Diesel

302

300

**FIG. 3**

Optimal Minimum Instantaneous Engine Load - Assuming 90% Energy Storage Round Trip Efficiency

400

**FIG. 4**

**FIG. 5**

Start/loop method

Receive regeneration state
indication

602

No — Is regeneration
active? — 604

Yes

606 — Can system limitations
capture additional
regeneration power?

No

Yes

Transmit request to
decrease regeneration

Transmit request to
increase regeneration

610

608

**FIG. 6**

600

**FIG. 7**

Receive signals indicating at least one of an SOC of a battery system, an SOC peak value, an SOC trough value, a route discharge duration and/or other metrics related to a route of a vehicle — 802

Transmit signals indicating an initial predetermined discharge rate, an increase in discharge rate, a decrease in discharge rate, and/or BTE charge limit — 804

Receive signals indicating a speed of an engine and/or an actual load of the engine — 806

Transmit signals indicating an increase in engine charging or discharge of battery system — 808

810 — Receive signals from at least one of an engine sensor, a brake system, a battery system, and a grid resistor system

812 — Transmit signals indicating an increase or decrease in regeneration capture

814 — Receive signals indicating current engine speed and current engine speed demand

816 — Transmit signals indicating introduction/increase in discharge or increase in engine charging

818 — Evaluate all transmitted signals

820 — Transmit battery command

FIG. 8                                 800

Europäisches
Patentamt

European
Patent Office

Office européen
des brevets

# EUROPEAN SEARCH REPORT

**Application Number**

EP 25 21 8122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/379999 A1 (YANG CHANGHUI [JP] ET AL) 9 December 2021 (2021-12-09) | 1-4, 7-10, 13-15 | INV.<br>B60L7/10<br>B60L58/12 |
| Y | * paragraphs [0041], [0057], [0060], [0067], [0069], [0070], [0075], [0076] *<br>* paragraph [0089] - paragraph [0092] *<br>* figures 5, 6, 10 * | 5,6,11, 12 | B60L58/13<br>B60W20/13 |
| Y | US 2016/243958 A1 (MILLER KENNETH JAMES [US] ET AL) 25 August 2016 (2016-08-25)<br>* paragraph [0046] *<br>* figure 6 * | 5,6,11, 12 | |

----- 

-----

**TECHNICAL FIELDS SEARCHED (IPC)**

B60L
B60W

The present search report has been drawn up for all claims

| Place of search | Date of completion of the search | Examiner |
|---|---|---|
| The Hague | 24 March 2026 | Lutz, Tobias |

EPO FORM 1503 03.82 (P04C01)

## ANNEX TO THE EUROPEAN SEARCH REPORT
## ON EUROPEAN PATENT APPLICATION NO.

EP 25 21 8122

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | | Publication date | Patent family member(s) | | Publication date |
|---|---|---|---|---|---|
| US 2021379999 | A1 | 09-12-2021 | CN | 113165550 A | 23-07-2021 |
| | | | JP | 7373805 B2 | 06-11-2023 |
| | | | JP | WO2020090341 A1 | 30-09-2021 |
| | | | US | 2021379999 A1 | 09-12-2021 |
| | | | WO | 2020090341 A1 | 07-05-2020 |
| US 2016243958 | A1 | 25-08-2016 | CN | 105905107 A | 31-08-2016 |
| | | | DE | 102016102825 A1 | 25-08-2016 |
| | | | US | 2016243958 A1 | 25-08-2016 |

EPO FORM P0459

For more details about this annex : see Official Journal of the European Patent Office, No. 12/82